# DEMANDE DE BREVET EUROPEEN

(11) **EP 1 132 590 A1**
(43) Date de publication de la demande: **12.09.2001**
(21) Numéro de dépôt: 01400305.7
(22) Date de dépôt: 07.02.2001
(51) Int. Cl.: F01P 7/16, G05D 23/13

(54) **Dispositif thermostatique à deux régimes de régulation commandés sélectivement**

(30) Priorité: 28.02.2000 FR 0002474
(71) Demandeur: VERNET S.A., 91291 Arpajon Cédex (FR)
(72) Inventeur: Mabboux, Lionel Jean, 91700 Saint Genevieve des Bois (FR); Henault, Claude, 78720 St Forget-les-Sablons (FR); Mas René, Jean-Claude, 91220 Bretigny S/Orge (FR)
(74) Mandataire: Farges, Roger

(57) **Abrégé**

Le dispositif comporte une chambre (3) présentant des accès (4, 5, 6) dont au moins l'un est obturable par un clapet (9, 10) porté par une partie mobile d'un élément thermostatique de dosage (7).

Pour obtenir deux régimes de régulation fiable, et conserver une régulation sauf en cas de destruction complète du dispositif, une conduite (1) débouchant dans la chambre (3) par un siège (14) pour le clapet (9) contient au moins une région d'un élément thermostatique de réglage de seuil de régulation (17) renfermant des moyens de chauffage (18) commandés sélectivement et comportant une butée (16) pour l'élément thermostatique (7) elle-même mobile dans la direction du mouvement de ladite partie mobile pour se rapprocher du siège (14) quand les moyens de chauffage sont activés.

Le dispositif est utilisable dans les circuits de refroidissement des moteurs thermiques.

## Description

L'invention concerne un dispositif thermostatique présentant deux seuils de fonctionnement afin d'assurer deux plages de régulation, activables sélectivement.

De tels dispositifs sont utiles notamment dans le domaine des véhicules automobiles, en vue d'optimiser le refroidissement du moteur du véhicule en fonction de la charge de celui-ci.

En effet, de manière conventionnelle, le circuit de refroidissement par liquide des moteurs à combustion interne comporte un système de canalisations reliant le moteur à un radiateur de refroidissement, dans lequel est inséré un dispositif thermostatique modifiant, dans le liquide à destination du moteur, la proportion entre le liquide dit « froid » provenant du radiateur et celui dit « chaud » qui n'a pas transité par celui-ci, afin de fournir au bloc moteur, du liquide de refroidissement à une même température en principe optimale, quelles que soient les circonstances.

Il s'est cependant révélé qu'à très forte charge, le moteur « chauffe » d'une manière telle que le respect de la température normalement optimale à l'entrée du moteur entraîne une température interne de celui-ci susceptible d'entraîner sa détérioration.

De manière connue, pour éviter cet inconvénient, on choisit comme température d'introduction du liquide, une température plus basse que la température normalement optimale, mais ainsi, à faible charge, ce qui correspond au cas d'utilisation le plus fréquent d'un véhicule, on fonctionne notablement au-dessous de la température optimale, et la consommation en carburant et la pollution sont augmentées.

En vue de remédier à ce nouvel inconvénient, l'objet du document FR 93 11 919 concerne un dispositif thermostatique comportant un unique élément thermostatique, qui régule la température au moyen d'un clapet et décale seulement en cas de fonctionnement du moteur à pleine charge, la plage de régulation, pour réguler alors à une température plus basse que la température optimale dans les conditions normales (généralement approximativement à demi-charge) ; à cette fin, l'élément thermostatique comporte un organe de chauffage électrique lui apportant un chauffage complémentaire lorsqu'une sonde disposée de manière appropriée détecte que le moteur fonctionne au voisinage de sa pleine charge. Cependant, en cas de défaillance de l'élément thermostatique, celui n'assure plus sa fonction de régulation, et le clapet de régulation reste fermé, ce qui mène très rapidement à l'endommagement du moteur.

En vue d'éviter un tel inconvénient, les objets des documents FR 85 15 967 et US 4 875 437 concernent un dispositif thermostatique comprenant un élément de régulation disposé dans le circuit de refroidissement, et un élément de décalage chauffé à l'extérieur du circuit de refroidissement et qui est porté par un bouchon de fermeture du dispositif qui s'étend transversalement à l'axe ou la direction de déplacement de la partie mobile de l'élément thermostatique. Grâce à cette conception, en cas de défaillance de l'élément de décalage chauffé, il subsiste une régulation ; cependant, l'élément de décalage est soumis aux conditions, pouvant être très défavorables, du milieu extérieur au dispositif thermostatique, notamment aux intempéries dans le cas d'une utilisation sur véhicule, et il est difficile de maîtriser parfaitement le niveau de température de cet élément ; en outre, la disposition adoptée ne permet pas au dispositif de posséder éventuellement deux accès alignés dans la direction dans laquelle s'étend l'axe de déplacement de la partie mobile de l'élément de régulation, comme cela est rendu nécessaire par l'implantation de certains moteurs.

Afin de remédier à ces inconvénients ainsi que d'autres qui seront vus dans la suite, l'invention concerne un dispositif thermostatique à deux régimes de régulation, comportant un équipage mobile de dosage de fluide comprenant au moins un clapet et adapté pour se mouvoir dans une chambre présentant un premier accès, d'entrée de fluide, un deuxième accès, de sortie de fluide, et au moins un troisième accès, au moins l'un de ces trois accès étant entouré d'un siège de clapet, l'équipage mobile de dosage étant porté par une partie d'un élément thermostatique de dosage de fluide qui est mobile par rapport à une autre partie de l'élément thermostatique disposée au moins partiellement hors de la chambre, le dispositif comportant également une partie de boîtier sous la forme d'une conduite de passage de fluide de refroidissement dont une extrémité débouche dans la chambre par un siège de clapet entourant un accès de la chambre, dispositif caractérisé en ce qu'il comporte en outre un élément thermostatique de réglage de seuil de régulation ayant une partie mobile de réglage de seuil munie d'une butée mobile pour la partie de l'élément thermostatique de dosage qui est hors de la chambre, et en ce qu'au moins une région de l'élément de réglage de seuil comprenant au moins un tronçon de sa partie fixe ainsi que sa partie mobile s'étend dans la conduite de fluide de refroidissement, et ladite région renferme des moyens de chauffage adaptés pour être commandés sélectivement vers l'un ou l'autre de deux états de température tels que dans l'état à température plus élevée, la distance entre la butée mobile et le siège par où la conduite débouche dans la chambre, et ainsi la température pour laquelle ce siège est libéré par son clapet, soient plus faibles que dans l'autre état.

Ainsi, l'élément thermostatique étant préservé des aléas climatiques, on obtient une régulation fiable, et on continue à réguler même en cas de défaillance mécanique autre naturellement que la destruction complète du dispositif. De plus, grâce à cette conception, la conduite peut si nécessaire être rectiligne et raccordée à un tuyau dans l'alignement de la direction du mouvement de l'équipage mobile ; en outre, l'élément de réglage de seuil peut être lui-même porté par une paroi périphérique extérieure d'une partie de boîtier en étant partiellement logé dans celle-ci, et ainsi d'une part les dimensions du dispositif peuvent être notablement réduites et d'autre part d'éventuels fils de liaison pour relier les moyens de chauffage électrique à une source d'alimentation n'ont pas à traverser un presse-étoupe. Egalement, le montage du dispositif est simple et rapide.

Le dispositif peut notamment présenter une ou plusieurs des caractéristiques suivantes :
- l'élément thermostatique de réglage de seuil comporte des moyens de chauffage électrique adaptés pour être reliés électriquement à des moyens de commande comprenant une source d'alimentation électrique activable et désactivable sélectivement ;
- la source d'alimentation électrique est activable et désactivable sélectivement pour commander l'élément thermostatique de réglage de seuil vers l'un ou l'autre d'un état chauffé et d'un état non chauffé ou moins chauffé pour que, quand l'élément de réglage de seuil est chauffé, la distance entre la butée mobile et le siège d'accès côté conduite, et ainsi la température pour laquelle ce siège est libéré par son clapet, soient plus faibles que quand il n'est pas chauffé ou il est moins chauffé ;
- l'élément de réglage de seuil s'étend entièrement dans la conduite, et la paroi extérieure de la conduite est traversée par un presse-étoupe lui-même traversé par des fils électriques pour relier électriquement les moyens de chauffage à des moyens de commande comprenant une source d'alimentation électrique activable et désactivable sélectivement ;
- la partie fixe de l'élément de réglage de seuil traverse la paroi extérieure de la conduite et s'étend dans une direction perpendiculaire à celle dans laquelle est mobile la partie mobile de l'élément thermostatique de dosage ;
- la partie fixe de l'élément de réglage de seuil traverse la paroi extérieure de la conduite et s'étend dans une direction inclinée par rapport à celle dans laquelle est mobile la partie mobile de l'élément thermostatique de dosage ;
- la partie fixe de l'élément de réglage de seuil traverse la paroi extérieure de la conduite et s'étend dans la même direction que celle dans laquelle est mobile la partie mobile de l'élément thermostatique de dosage ;
- l'élément de réglage de seuil comporte une partie fixe dont un tronçon s'étend dans l'espace interne de la conduite approximativement transversalement ;
- la conduite est centrée sur un axe longitudinal sur lequel est centré le siège de clapet par lequel une extrémité de la conduite débouche dans la chambre, et la partie mobile de l'élément thermostatique de dosage qui porte l'équipage mobile comprenant le clapet pour ce siège est mobile en translation le long de cet axe ;
- la conduite est coudée ;
- les moyens de chauffage de l'élément de réglage de seuil s'étendent dans la partie fixe de cet élément, dans la direction dans laquelle cette partie fixe traverse la paroi extérieure de la conduite ;
- les moyens de chauffage de l'élément de réglage de seuil s'étendent dans la direction dans laquelle est mobile la partie mobile de l'élément thermostatique de dosage ;
- les moyens de chauffage comportent une résistance électrique enroulée;
- les moyens de chauffage électrique comportent une résistance électrique sérigraphiée sur une plaquette isolante ;
- les moyens de chauffage électrique comportent une résistance électrique constituée par un barreau résistant ;
- les moyens de chauffage comprennent une résistance électrique logée dans un compartiment, renfermant une masse de cire dilatable, d'un boîtier appartenant à la partie fixe de l'élément de réglage de seuil ;
- la partie fixe de l'élément de réglage de seuil comprend un boîtier comportant un compartiment renfermant une masse de cire dilatable, ce boîtier présentant en regard du siège une ouverture obturée par un diaphragme;
- l'élément de réglage de seuil comporte un diaphragme présentant une forme en cloche dit « diaphragme à sac » ;
- l'élément de réglage de seuil comporte un diaphragme plat ;
- la conduite comporte deux tronçons en aboutement, fixés l'un à l'autre, et dont les surfaces de joint respectives en regard présentent des échancrures dans lesquelles est insérée une région de l'élément de réglage de seuil ;
- l'équipage mobile de dosage de fluide comprend au moins deux clapets, et au moins deux des au moins trois accès sont entourés de sièges respectifs pour les deux clapets de sorte que lorsque l'un quelconque des clapets quitte son siège et s'en éloigne, l'autre se rapproche du sien éventuellement jusqu'à obturation ;
- les moyens de chauffage électrique sont reliés par des fils électriques à une source d'alimentation électrique reliée par ailleurs à une sonde de détection de température adaptée pour détecter la température d'un liquide ;
- les moyens de chauffage électrique sont reliés par des fils électriques à une source d'alimentation électrique reliée par ailleurs à une sonde de détection de température adaptée pour détecter la température d'un liquide et à une alarme, pour que, lorsque la sonde détecte une température au moins égale à une température de sécurité prédéterminée, la source d'alimentation électrique soit activée et ainsi d'une part l'élément de réglage soit chauffé électriquement et le dispositif régule dans une gamme basse de températures, et d'autre part l'alarme soit activée ;
- la chambre comporte un accès de sortie entouré d'un siège réalisé dans la conduite pour un clapet, un accès de sortie éventuellement entouré d'un siège pour un clapet, et un accès d'entrée ;
- l'accès d'entrée est un accès d'entrée de liquide chaud provenant d'un moteur par exemple de véhicule, et les accès de sortie sont des accès de sortie de liquide chaud adaptés pour être reliés respectivement à une entrée d'un radiateur de refroidissement et à une entrée du moteur éventuellement par l'intermédiaire d'une pompe de circulation ;
- la chambre comporte un accès d'entrée entouré d'un siège réalisé dans la conduite pour un clapet, un accès d'entrée éventuellement entouré d'un siège pour un clapet, et un accès de sortie;
- l'accès d'entrée entouré d'un siège réalisé dans la conduite est un accès d'entrée de liquide froid adapté pour être relié à un radiateur de refroidissement par exemple de véhicule, l'autre accès d'entrée est un accès d'entrée de liquide chaud provenant d'un moteur du véhicule, et l'accès de sortie est un accès de sortie de liquide chaud ou de liquide froid ou d'un mélange de liquide chaud et de liquide froid en fonction de la position de l'élément thermostatique de dosage.

D'autres caractéristiques et avantages de l'invention ressortiront de la description qui va suivre de formes de réalisation de l'invention données à titre d'exemples non limitatifs et représentées sur les dessins joints dans lesquels :
- la figure 1 est une vue en coupe longitudinale d'un dispositif selon l'invention,
- la figure 2 est une autre vue en coupe longitudinale du dispositif selon l'invention, selon un plan perpendiculaire au plan de coupe de la figure 1,
- les figures 3A, 3B, 3C sont des coupes longitudinales de trois exemples de réalisation d'un élément thermostatique de réglage de seuil de régulation adapté pour équiper un dispositif selon l'invention,
- les figures 4A, 4B, 4C sont des coupes longitudinales de trois autres exemples de réalisation d'un élément thermostatique de réglage de seuil de régulation adapté pour équiper un dispositif selon l'invention,
- la figure 5 montre schématiquement le montage du dispositif des figures 1 et 2 dans un circuit de refroidissement de véhicule à moteur thermique,
- la figure 6 montre schématiquement une variante du montage de la figure 5,
- les figures 7 et 8 sont des diagrammes illustrant le fonctionnement du dispositif selon l'invention dans les circuits de refroidissement représentés schématiquement sur les figures 5 et 6, et
- les figures 9 à 12 sont des vues en coupe longitudinale correspondant à celle de la figure 1, de quatre variantes de réalisation du dispositif des figures 1 et 2.

Sur les figures, afin de ne pas surcharger le dessin, un grand nombre de composants et de traits relatifs à des composants qui sont en arrière des plans de coupe n'ont pas été représentés, mais la compréhension de l'agencement du dispositif selon l'invention sera facilitée par la description qui va suivre.

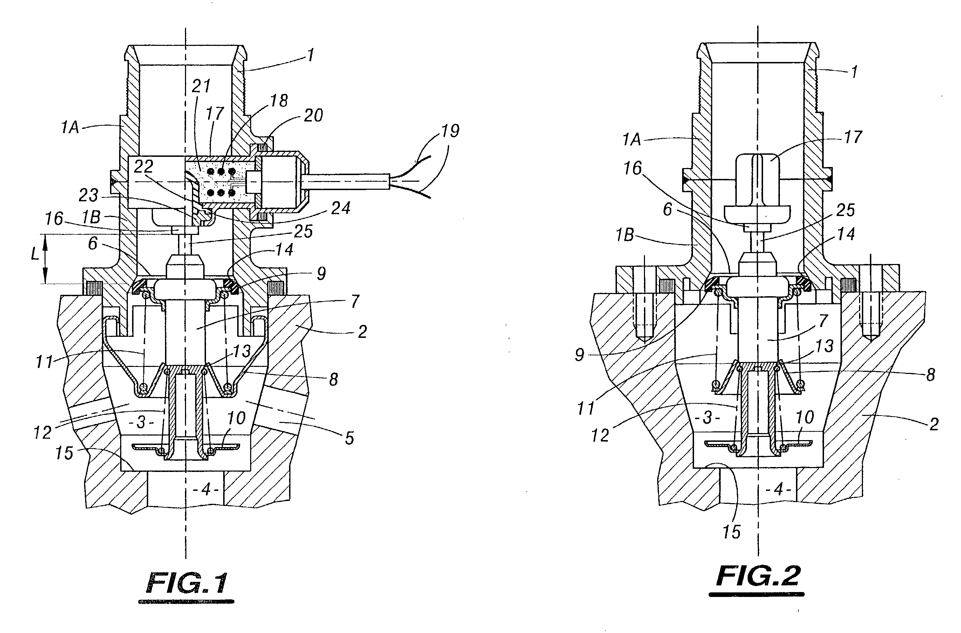

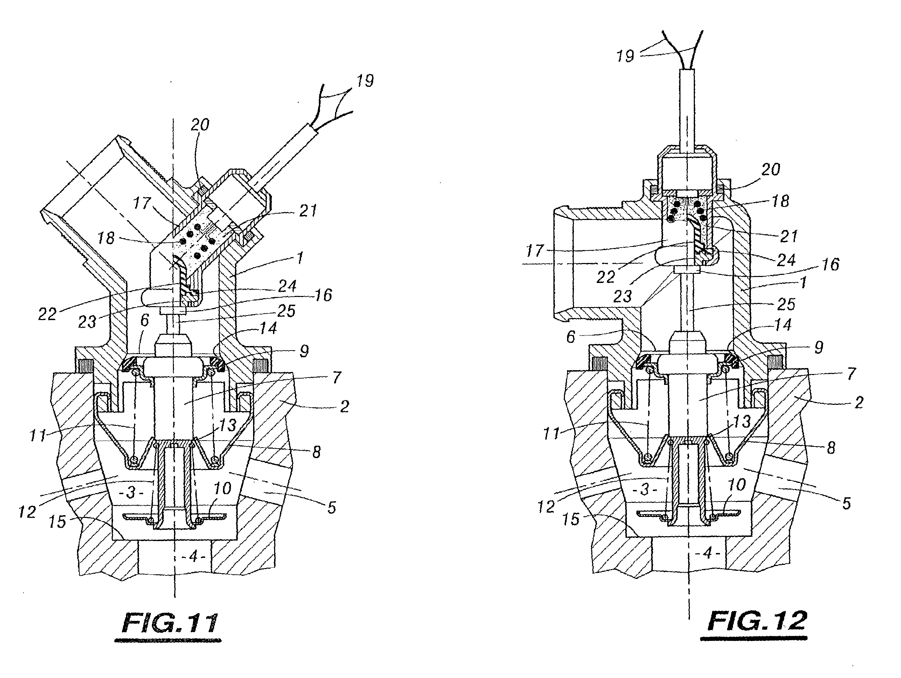

Le dispositif thermostatique représenté comporte de manière connue divers organes logés dans un boîtier formé par une conduite ou pipe 1 pouvant être au choix rectiligne (figures 1, 2, 5, 6, 9, 10) ou encore coudée (figures 11 et 12), et par un corps 2 pouvant être constitué par une région d'un moteur de véhicule entourant une chambre 3 de transit pour le liquide de refroidissement creusée dans cette région et dans laquelle aboutissent comme on le verra divers canaux de circulation de fluide. La conduite 1 est fixée au corps 2 par exemple par vis.

Ici, la conduite 1 et la chambre 3 présentent une forme générale de révolution à section droite approximativement circulaire et s'étendent en alignement le long d'un même axe longitudinal central, dans une première direction.

La chambre 3 comporte au moins trois accès 4, 5, 6 dont la fonction dépend du mode d'utilisation du dispositif, et notamment de l'implantation de celui-ci dans le circuit de refroidissement du moteur ; un premier accès est un accès d'entrée de fluide dit « chaud » provenant du moteur, un deuxième accès est un accès de sortie de fluide pour évacuer de la chambre la partie du fluide destinée à être envoyée au moteur, généralement par l'intermédiaire d'une pompe de circulation, et un troisième accès, relié à un radiateur de refroidissement, peut être en fonction de l'implantation du dispositif dans le circuit de refroidissement, un accès de sortie de fluide « chaud » relié à l'entrée du radiateur ou un accès d'entrée de fluide « refroidi » ou « froid » relié à la sortie du radiateur; un éventuel quatrième accès peut dans certains cas d'utilisation être relié à divers appareils tels qu'un aérotherme ou des échangeurs. L'une des régions d'extrémités de la conduite 1 débouche dans la chambre 3, en pénétrant dans celle-ci, et c'est l'orifice correspondant qui constitue le troisième accès de fluide. Le premier et le deuxième accès 4, 5 sont les embouchures de deux canaux aboutissant dans la chambre, l'un à l'opposé du troisième accès 6 et centré sur l'axe central du dispositif, et l'autre latéralement.

A l'intérieur de la chambre 3, est logée au moins partiellement une partie, mobile en translation dans la première direction, d'un élément thermostatique 7 ici à cire, portée et guidée dans un étrier 8 s'étendant dans cette chambre 3, cet étrier étant accroché à la région d'extrémité de la conduite 1 qui débouche dans la chambre. Cette partie mobile de l'élément thermostatique 7 porte un équipage mobile comprenant au moins un clapet 9, ici deux clapets 9, 10 disposés respectivement en appui contre des collerettes des régions d'extrémités opposées de cette partie mobile de l'élément thermostatique ; ces deux clapets 9, 10 sont enfilés autour de la partie mobile de l'élément thermostatique et sollicités en direction de leurs collerettes respectives par une extrémité d'un organe élastique tel qu'un ressort 11, 12 dont l'extrémité opposée est en appui contre l'étrier 8 pour le ressort 11 de l'un des clapets, et contre un épaulement 13 de la partie mobile du corps de l'élément thermostatique pour le ressort 12 de l'autre clapet.

Au moins l'un et ici deux des au moins trois accès de la chambre sont entourés de sièges respectifs 14, 15 pour les deux clapets 9, 10, centrés sur l'axe longitudinal de la conduite 1. Avec la structure choisie ici, l'un est le troisième accès 6, dont le siège 14, usiné dans la région d'extrémité de la conduite 1, est tronconique et évasé en direction de l'intérieur de la chambre 3 ; cet accès 6 est adapté pour recevoir un clapet 9 de forme correspondante proche d'une partie de l'élément thermostatique 7 qui est disposée au moins partiellement (ici, totalement) hors de la chambre, plus précisément dans la conduite 1, dite habituellement « partie fixe », mais qui est ici également mobile dans la première direction comme on le verra dans la suite ; l'autre est ici l'accès 4 constitué par l'embouchure de canal centrée sur l'axe du dispositif, dont le siège 15, usiné dans le corps 2, est plan et s'étend perpendiculairement à l'axe central du dispositif ; cet accès 4 est adapté pour recevoir un clapet plan proche de l'extrémité libre de la partie mobile de l'élément thermostatique ; on peut noter que la partie habituellement fixe de l'élément thermostatique 7 est ici constituée par un piston, monté coulissant dans une coupelle contenant une cire très dilatable à la chaleur.

Comme les deux clapets 9, 10 sont montés, à proximité des deux extrémités opposées de la partie de l'élément thermostatique 7 qui est mobile en translation le long de l'axe longitudinal dans la chambre 3, entre leurs deux sièges respectifs 14, 15, lorsque l'un quelconque des deux clapets quitte son siège et s'en éloigne, l'autre se rapproche du sien avec une possibilité de prendre appui sur lui si l'amplitude du mouvement est suffisante. Le ressort cylindrique 11 du clapet tronconique 9 étant en appui contre l'étrier fixe 8, est comprimé lorsque ce clapet s'éloigne de son siège ; le ressort tronconique 12 du clapet plan 10 en appui contre l'épaulement 13 est comprimé lorsque, ce clapet étant en butée, le mouvement de translation se poursuit ; il joue ainsi le rôle de ressort de surcourse.

Ainsi, dans l'hypothèse où la partie de l'élément thermostatique 7 qui se trouve dans la conduite 1 est maintenue fixe au moyen d'une butée 16, cet agencement permet, si les deux accès 4, 6 à clapet sont des sorties et au moins un autre accès 5 est une entrée, un dosage relatif des écoulements de sortie, et si les deux accès 4, 6 à clapet sont des entrées et au moins un autre accès 5 est une sortie, un dosage des proportions des écoulements d'entrée dans l'écoulement de sortie. Dans chacun des deux cas, on obtient donc un régime de fonctionnement déterminé par l'emplacement de la butée 16, caractérisé par la distance L qui sépare une surface de butée pour la partie dite fixe de l'élément thermostatique de dosage 7, de la région d'appui du siège 14 pour le clapet 9 tronconique, appelée « boîte » du dispositif thermostatique ; de la valeur de la boîte, dépend le seuil de déclenchement du dispositif thermostatique, c'est-à-dire la température pour laquelle le clapet tronconique quitte son siège. On peut noter que le même raisonnement s'applique dans le cas où un seul accès est muni d'un siège obturable par un clapet, ici l'accès 6 muni d'un siège 14 obturable par le clapet tronconique 9, avec simplement une efficacité légèrement inférieure.

Aussi, selon l'invention, pour obtenir deux régimes de fonctionnement du dispositif thermostatique et plus particulièrement de l'élément thermostatique de dosage de fluide 7 et de l'équipage mobile de dosage de fluide qu'il porte, on modifie sélectivement la boîte du dispositif, et pour cela l'emplacement de la butée 16 dans la conduite 1 le long de l'axe longitudinal de l'élément de dosage ; alors, la partie dite fixe de l'élément thermostatique 7 peut se déplacer en fonction de l'emplacement de la butée 16; ainsi, pour obtenir sélectivement deux régimes de fonctionnement correspondant à deux seuils de déclenchement différents, il suffit de prévoir deux emplacements possibles pour la butée 16.

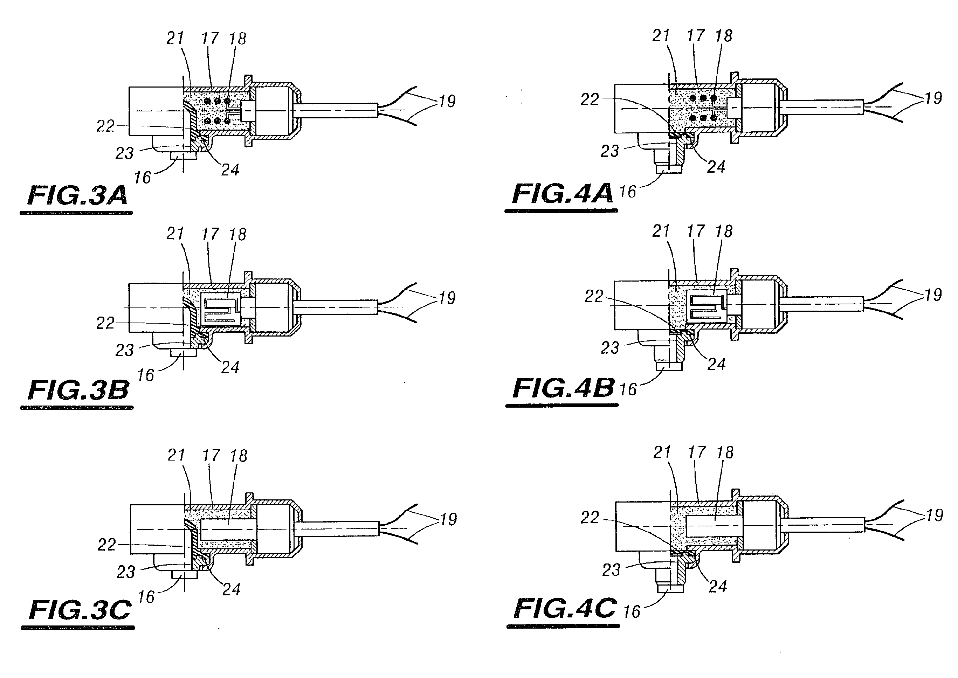

A cette fin, dans la conduite 1, est disposé un élément de réglage de seuil de régulation 17 ici constitué par un autre élément thermostatique à cire comportant une partie (réellement) fixe s'étendant, si la conduite est rectiligne ou coudée à angle obtus, généralement dans une deuxième direction différente de la première direction, et une partie mobile dans la première direction et munie d'un piston constituant la butée mobile 16 pour la partie dite fixe de l'élément thermostatique de dosage de fluide 7 ; cependant, comme on le verra dans la suite, notamment si la conduite 1 est coudée à angle droit, la partie fixe de l'élément de réglage 17 peut s'étendre dans la première direction, comme la partie mobile. Cet autre élément thermostatique 17 de réglage de seuil, dont différentes formes de réalisation possibles sont représentées sur les figures 3A à 4C, comporte, pour l'actionnement de sa partie mobile, des moyens de chauffage électrique, constitués de préférence par une résistance électrique 18 ou une thermistance connue dans la technique sous le nom de C.T.P., adaptés pour être reliés par des fils électriques extérieurs 19 à des moyens de commande constitués ici par une source d'alimentation activable et désactivable sélectivement, pour que l'élément thermostatique 17 puisse être chauffé ou non sélectivement.

L'élément thermostatique de réglage de seuil 17 est porté par une paroi, généralement la paroi périphérique annulaire, de la conduite 1. Alors, une région de cette paroi extérieure périphérique est traversée de part en part par une région de la partie fixe s'étendant dans la deuxième direction, de l'élément 17, proche de l'une des extrémités de l'élément ; une autre région, approximativement centrale, de l'élément de réglage de seuil 17, traverse transversalement l'espace interne de la conduite, ici le long d'un diamètre de celle-ci ; la surface intérieure de la région de la conduite qui est diamétralement opposée à celle qui est traversée par l'élément de réglage de seuil présente une cavité dans laquelle est positionnée la région de l'extrémité opposée de cet élément.

La partie mobile de l'élément de réglage de seuil s'étend le long de l'axe longitudinal central de la conduite, est centrée sur lui, et est adaptée pour se déplacer dans la direction de celui-ci, cet axe étant également celui sur lequel sont centrés le ou les sièges 14, 15 de clapets et la partie mobile en translation longitudinale de l'élément thermostatique de dosage 7 qui porte l'équipage mobile comportant le ou les clapets 9, 10.

Dans la forme de réalisation représentée sur les figures 1 et 2, afin de permettre le montage de l'élément de réglage de seuil 17, la conduite 1 comporte deux tronçons 1A, 1B, en aboutement et dont les surfaces de joint respectives en regard présentent des échancrures dans lesquelles est logé cet élément thermostatique 17, que l'on a fixés l'un à l'autre. Cependant, il est possible d'avoir une conduite en une seule pièce, pour peu que la forme extérieure de l'élément de réglage de seuil soit conçue de manière appropriée.

Dans le cas présent où l'élément de réglage de seuil est un élément thermostatique, celui-ci comprend (figures 3A à 4C), en tant que partie fixe, un boîtier présentant extérieurement, dans sa région traversant la conduite, une collerette de positionnement adaptée pour être insérée dans des échancrures semi-circulaires creusées en vis-à-vis dans les parois périphériques respectives des deux tronçons de conduite 1A, 1B, avec interposition d'une rondelle compressible 20 d'étanchéité et de rattrapage de jeu ; le boîtier présente intérieurement deux compartiments se succédant le long d'un axe principal ici confondu avec un diamètre de la conduite 1, cloisonnés l'un par rapport à l'autre au niveau de la collerette, au moyen d'un disque présentant une ouverture centrale ; dans l'un des compartiments, s'étendant dans une région du boîtier qui est partiellement en saillie hors de la conduite 1, les fils électriques extérieurs 19 sont reliés électriquement aux conducteurs d'alimentation de la résistance électrique 18 dont la région chauffante est placée dans l'autre compartiment, qui s'étend dans l'espace interne de la conduite ; les conducteurs d'alimentation passent d'un compartiment à l'autre à travers l'ouverture centrale du disque de cloisonnement, munie de moyens d'étanchéité empêchant en revanche le passage de la cire se trouvant dans cet autre compartiment. A l'intérieur du compartiment s'étendant diamétralement dans l'espace interne de la conduite 1, la résistance électrique 18, par exemple un composant enroulé en hélice connu commercialement sous le nom de THERMOCOAX (figures 3A et 4A) ou une résistance sérigraphiée sur une plaquette isolante (figures 3B et 4B) ou encore un barreau résistant (figures 3C et 4C), est noyée dans une masse de cire dilatable 21 ; ce compartiment présente dans sa paroi latérale une ouverture circulaire centrée sur l'axe longitudinal de la conduite 1, ménagée dans la région du boîtier qui est en vis-à-vis du ou des sièges 14, 15 de clapets, obturée par un diaphragme souple déformable 22 ici en forme de cloche dit « diaphragme à sac » (figures 3A, 3B, 3C) s'étendant en saillie dans le compartiment, constituant avec le piston formant butée 16, la partie mobile de l'élément de réglage de seuil 17, et qui est fixé, par son pourtour formant collerette, au boîtier ; en variante , le diaphragme 22 peut être un diaphragme du type dit « plat » (figures 4A, 4B, 4C), plus fiable et permettant si nécessaire de réduire l'encombrement en longueur de l'élément de- réglage de seuil 17 ; pour la fixation du diaphragme, le boîtier présente, autour de cette ouverture, une double paroi délimitant une cavité annulaire dans laquelle sont logés la collerette de pourtour du diaphragme 22, une collerette de pourtour d'un contre-diaphragme 23 d'appui et de centrage, et un bourrelet 24 d'étanchéité en une seule pièce avec la collerette de pourtour du diaphragme 22. Dans la forme de réalisation des figures 1 et 2, du côté de la chambre 3, le diaphragme souple 22 forme réceptacle pour le piston formant butée pour la partie dite fixe de l'élément thermostatique de dosage 7 constituée par le piston 25 de celui-ci, mais en variante la butée pourrait être constituée par le fond du diaphragme 22, et l'élément thermostatique de dosage serait alors muni d'un piston 25 de grande longueur s'étendant jusqu'au fond du diaphragme souple 22 ; pour éviter toute détérioration du fond du diaphragme 22 en cas de forte dilatation de la cire de l'élément thermostatique de dosage 7, le piston de l'élément de réglage de seuil 17 comporte une région en forme de collerette adaptée pour venir en appui sur le contre-diaphragme 23 lorsque le diaphragme 22 est en position rétractée, et c'est l'emplacement de la surface d'extrémité libre de cette collerette qui constitue la surface de butée définissant la valeur de la boîte L du dispositif ; en outre, le contre-diaphragme 23, étant en matériau rigide, contribue à guider le piston formant butée 16 dans l'élément de réglage de seuil 17.

Il résulte de cet agencement que lorsque l'élément de réglage de seuil 17 est chauffé, la dilatation de la masse de cire 21 repousse le diaphragme 22 selon un axe ici perpendiculaire à l'axe principal de l'élément, en direction de la chambre 3, et ainsi la butée mobile 16 pour l'élément thermostatique de dosage de fluide 7 se déplace dans cette direction ; il en résulte une diminution de la boîte L de cet élément thermostatique 7 ; ainsi, une plus faible dilatation, donc une plus faible température, de l'élément 7, suffit pour que le clapet tronconique 9 quitte son siège 14 et que le clapet plan, s'il existe, se rapproche du sien. Lorsque l'élément de réglage de seuil 17 est désactivé, le diaphragme 22 se rétracte, la boîte de l'élément thermostatique de dosage 7 est allongée, et une plus grande dilatation donc une température plus élevée de l'élément thermostatique de dosage est nécessaire pour faire décoller le clapet tronconique 9 de son siège 14.

Le dispositif thermostatique à deux régimes de régulation qui vient d'être décrit peut être utilisé dans un circuit de refroidissement de moteur thermique par exemple de véhicule, de diverses manières.

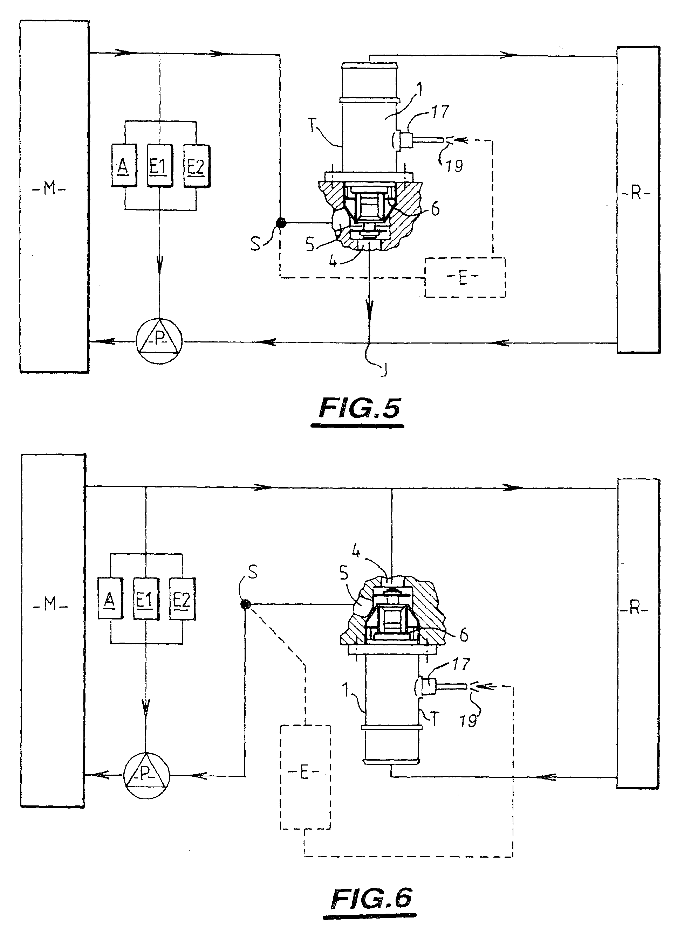

La figure 5 montre un dispositif thermostatique T tel que décrit ci-dessus dans un montage dit « en sortie de moteur ».

Plus précisément, l'accès 5 sans clapet du dispositif thermostatique T est une entrée reliée à la sortie de liquide de refroidissement d'un moteur M et est donc alimenté en liquide chaud ; l'accès 6 à clapet tronconique est une sortie reliée à l'entrée d'un radiateur de refroidissement R auquel elle transmet du liquide chaud, à refroidir ; l'accès 4 à clapet plan ou sans clapet est une sortie de liquide chaud reliée à une entrée d'une pompe de circulation P dont la sortie est reliée à l'entrée de liquide de refroidissement du moteur, pour transmettre à cette pompe une partie du liquide chaud provenant de l'accès 5, en fonction de la position de l'élément thermostatique de dosage 7, additionné à du liquide refroidi provenant du radiateur R, au niveau d'un organe de jonction J relié d'une part au dispositif thermostatique T et d'autre part au radiateur R ; dans une ou plusieurs dérivations branchées d'un côté à la ligne reliant la sortie du moteur et l'accès d'entrée 5 sans clapet, et de l'autre côté à une entrée supplémentaire de la pompe P, sont insérés un aérotherme A et des échangeurs E1, E2 d'huile de boîte de vitesses et d'huile moteur respectivement. Un bloc électronique de commande et d'alimentation E est relié électriquement d'une part à une sonde de température S détectant la température du liquide chaud en provenance du moteur allant au dispositif thermostatique T, et d'autre part au dispositif thermostatique T par l'intermédiaire des fils 19, pour sélectivement fournir ou non à l'élément thermostatique de réglage de seuil 17 son énergie de chauffage, en fonction de la température détectée ; de préférence, le bloc E est également relié à une alarme (non représentée) visible ou/et audible par le conducteur du véhicule, destinée à être activée par le bloc E lorsque la sonde S détecte une température au moins égale à une température de sécurité prédéterminée.

La figure 6 montre un dispositif thermostatique tel que décrit ci-dessus dans un montage dit « en entrée de moteur » (les mêmes références numériques désignent les mêmes éléments que précédemment).

L'accès 4 à clapet plan ou sans clapet est une entrée reliée à la sortie de liquide de refroidissement d'un moteur M à laquelle est également reliée l'entrée d'un radiateur de refroidissement R, pour en recevoir un liquide chaud ; l'accès 6 à clapet tronconique est une entrée reliée à la sortie du radiateur de refroidissement R pour en recevoir du liquide froid ; l'accès 5 sans clapet est une sortie de liquide pouvant être ainsi un mélange de liquide chaud et de liquide froid, ou du liquide chaud, ou du liquide froid, reliée à une entrée d'une pompe de circulation P dont la sortie est reliée à l'entrée de liquide de refroidissement du moteur pour lui transmettre du liquide dont la température dépend de la position de l'élément thermostatique de dosage 7 ; dans une ou plusieurs dérivations branchées d'un côté à la ligne reliant la sortie du moteur et l'accès d'entrée 4 à clapet plan ou sans clapet et de l'autre à une entrée supplémentaire de la pompe P, sont insérés un aérotherme A et des échangeurs E1, E2 d'huile de boîte de vitesse et d'huile moteur respectivement. Un bloc électronique de commande et d'alimentation E est relié électriquement d'une part à une sonde de température S détectant la température du liquide allant au moteur et provenant du dispositif thermostatique T, et d'autre part au dispositif thermostatique T par l'intermédiaire des fils 19, pour sélectivement fournir ou non à l'élément thermostatique de réglage de seuil 17 son énergie de chauffage, en fonction de la température détectée ; de préférence, le bloc E est également relié à une alarme (non représentée) visible ou/et audible par le conducteur, destinée à être activée par le bloc E lorsque la sonde S détecte une température au moins égale à une température de sécurité prédéterminée.

Ainsi, dans les deux montages des figures 5 et 6, on met en oeuvre un chauffage électrique pour réguler à basse température lorsque le moteur est à pleine charge.

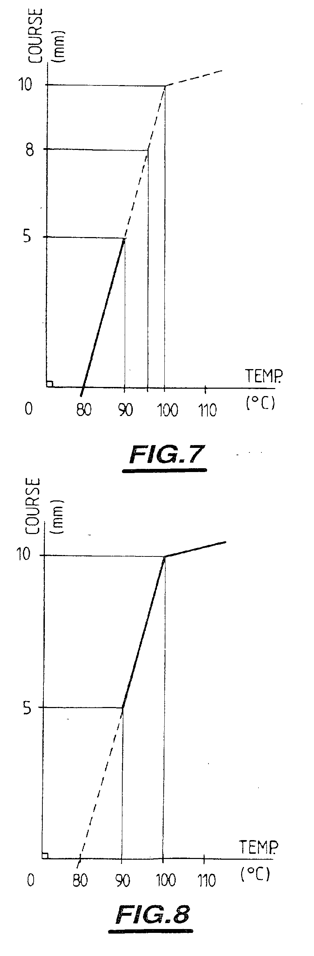

Les figures 7 et 8 illustrent un exemple de mode de fonctionnement du dispositif thermostatique selon l'invention, que ce soit dans le montage de la figure 5 ou dans celui de la figure 6, et montrent alors la courbe « course d'élongation du piston de l'élément de dosage / température de régulation », d'une part en régulation à basse température (figure 7: moteur à pleine charge, élément de réglage de seuil chauffé), et d'autre part en régulation à haute température (figure 8 : moteur à demi-charge, élément de réglage de seuil non chauffé).

Si, le moteur fonctionnant à pleine charge, l'élément de réglage de seuil 17 est chauffé, la course d'élongation du piston à partir de sa position rétractée est de cinq millimètres, ce qui correspond à une température de régulation T1 telle que repérée par la sonde S de la figure 6, comprise dans une gamme basse de 80° C à 90° C. Si, le moteur fonctionnant à demi-charge, l'élément 17 de réglage de seuil n'est pas chauffé, la course d'élongation du piston est également de cinq millimètres, mais comptés au-delà des cinq millimètres de la course précédente, ce qui correspond à une température de régulation T2 telle que repérée par la sonde S de la figure 6, comprise dans une gamme haute de 90° C à 112° C.

Toujours dans le même exemple, on choisit une température T3 de sécurité supérieure à la gamme haute, par exemple T3 = 113° C, pour laquelle, si elle est détectée par la sonde S, on revient automatiquement en régulation à basse température quelles que soient les conditions de charge du moteur, et on déclenche une alarme reliée également au bloc électronique E, visible ou/et audible par le conducteur du véhicule ; si la sonde S détecte une température au moins égale à T3, l'alimentation électrique de l'élément de réglage 17 est activée, l'élément de réglage est chauffé électriquement, et l'alarme est également activée.

Ainsi, dans la plupart des cas de défaillance du dispositif thermostatique T, on introduit dans le moteur un liquide de refroidissement à la température appropriée à un fonctionnement à pleine charge du moteur, et on limite donc les risques de détérioration de celui-ci.

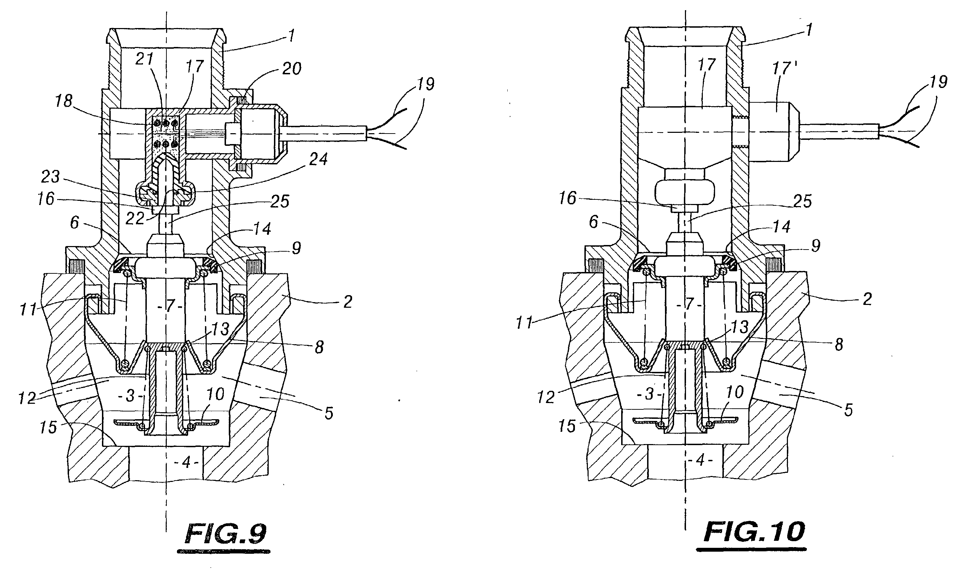

Bien entendu, l'invention n'est pas limitée aux formes de réalisation décrites en détail dans ce qui précède, et on pourra en prévoir d'autres sans sortir de son cadre. Les figures 9 à 12, sur lesquelles les éléments correspondant à des éléments visibles sur les figures précédentes portent les mêmes repères numériques, montrent de telles autres formes de réalisation.

Par exemple, la figure 9 montre une forme de réalisation très proche de celle des figures 1 et 2, dans laquelle l'élément de réglage de seuil 17 est légèrement différent de ceux décrits et représentés précédemment. En effet, dans les formes de réalisation précédemment décrites et représentées, le compartiment de l'élément de réglage de seuil dans lequel est disposée la résistance électrique 18 prolonge un tronçon de la partie fixe de l'élément qui est partiellement en saillie hors de la conduite 1, et s'étend le long de l'axe principal du boîtier, donc le long d'un diamètre de la conduite ; en revanche, dans la forme de réalisation de la figure 9, ce compartiment s'étend perpendiculairement à l'axe principal du boîtier, donc dans la première direction du dispositif, dans le prolongement du diaphragme souple 22.

La figure 10 montre une forme de réalisation également très proche de celle des figures 1 et 2, mais dans laquelle l'élément de réglage de seuil 17 est entièrement logé dans la conduite 1, l'axe principal de son boîtier s'étendant dans la première direction du dispositif et non diamétralement à la conduite 1. L'élément de réglage de seuil ne comportant pas de région traversant la paroi extérieure de la conduite 1, celle-ci est traversée par un passe-étoupe 17' auquel est fixé l'élément 17 et lui-même traversé longitudinalement par des fils électriques 19 pour relier électriquement la résistance aux moyens de commande.

La figure 11 montre une forme de réalisation dans laquelle la conduite 1 est coudée à angle obtus, approximativement à 135°, et l'élément de réglage de seuil 17 est porté par la paroi extérieure de cette conduite 1 ; cet élément de réglage de seuil 17, dont la structure est de manière générale similaire à celle de l'élément des figures 1, 2, 3A et 4A, est lui-même coudé à 135° au lieu de 90° comme sur les figures 1 et 2 ; plus précisément, la partie fixe de l'élément de réglage de seuil 17 traversant la paroi extérieure de la conduite 1 s'étend dans une direction inclinée à 45° par rapport à celle dans laquelle est mobile la partie mobile de l'élément thermostatique de dosage 7 ; en variante, l'élément de réglage de seuil 17 pourrait être rectiligne, ou encore coudé à 90° s'il était porté par la paroi extérieure de la partie inférieure de la conduite 1. Là encore, la région de l'élément 17 renfermant les moyens de chauffage n'étant pas à l'extérieur de la conduite 1, le fonctionnement du dispositif n'est pas tributaire des conditions climatiques.

La figure 12 montre une forme de réalisation dans laquelle la conduite 1 est coudée à angle droit, et l'élément de réglage de seuil 17 étant rectiligne, traverse la paroi extérieure de la conduite 1 et s'étend dans la même direction que celle dans laquelle est mobile la partie mobile de l'élément thermostatique de dosage, l'élément 17 étant porté par la paroi extérieure de la partie supérieure de la conduite 1. Là encore, la région de l'élément 17 renfermant les moyens de chauffage n'étant pas à l'extérieur de la conduite 1, le fonctionnement du dispositif n'est pas tributaire des conditions climatiques.

## Revendications

1. Dispositif thermostatique à deux régimes de régulation, comportant un équipage mobile de dosage de fluide comprenant au moins un clapet (9, 10) et adapté pour se mouvoir dans une chambre (3) présentant un premier accès, d'entrée de fluide, un deuxième accès, de sortie de fluide, et au moins un troisième accès, au moins l'un de ces trois accès étant entouré d'un siège (14, 15) de clapet, l'équipage mobile de dosage étant porté par une partie d'un élément thermostatique de dosage de fluide (7) qui est mobile par rapport à une autre partie de l'élément thermostatique disposée au moins partiellement hors de la chambre, le dispositif comportant également une partie de boîtier sous la forme d'une conduite (1) de passage de fluide de refroidissement dont une extrémité débouche dans la chambre (3) par un siège (14) de clapet entourant un accès (6) de la chambre, dispositif **caractérisé en ce qu'**il comporte en outre un élément thermostatique de réglage de seuil de régulation (17) ayant une partie mobile de réglage de seuil munie d'une butée mobile (16) pour la partie de l'élément thermostatique de dosage (7) qui est hors de la chambre (3), et en ce qu'au moins une région de l'élément de réglage de seuil comprenant au moins un tronçon de sa partie fixe ainsi que sa partie mobile s'étend dans la conduite (1) de fluide de refroidissement, et ladite région renferme des moyens de chauffage (18) adaptés pour être commandés sélectivement vers l'un ou l'autre de deux états de température tels que dans l'état à température plus élevée, la distance entre la butée mobile (16) et le siège (14) par où la conduite (1) débouche dans la chambre (3), et ainsi la température pour laquelle ce siège est libéré par son clapet (9), soient plus faibles que dans l'autre état.

2. Dispositif thermostatique selon la revendication 1, **caractérisé en ce que** l'élément thermostatique de réglage de seuil (17) comporte des moyens de chauffage électrique (18) adaptés pour être reliés électriquement à des moyens de commande comprenant une source d'alimentation électrique activable et désactivable sélectivement.

3. Dispositif thermostatique selon la revendication 2, **caractérisé en ce que** la source d'alimentation électrique est activable et désactivable sélectivement pour commander l'élément thermostatique de réglage de seuil (17) vers l'un ou l'autre d'un état chauffé et d'un état non chauffé ou moins chauffé pour que, quand l'élément de réglage de seuil est chauffé, la distance entre la butée mobile (16) et le siège (14) d'accès côté conduite, et ainsi la température pour laquelle ce siège est libéré par son clapet (9), soient plus faibles que quand il n'est pas chauffé ou il est moins chauffé.

4. Dispositif thermostatique selon l'une quelconque des revendications 1 à 3, **caractérisé en ce que** l'élément de réglage de seuil (17) s'étend entièrement dans la conduite (1), et la paroi extérieure de la conduite (1) est traversée par un presse-étoupe (17') lui-même traversé par des fils électriques (19) pour relier électriquement les moyens de chauffage (18) à des moyens de commande comprenant une source d'alimentation électrique activable et désactivable sélectivement.

5. Dispositif thermostatique selon l'une quelconque des revendications 1 à 3, **caractérisé en ce que** la partie fixe de l'élément de réglage de seuil (17) traverse la paroi extérieure de la conduite (1) et s'étend dans une direction perpendiculaire à celle dans laquelle est mobile la partie mobile de l'élément thermostatique de dosage (7).

6. Dispositif thermostatique selon l'une quelconque des revendications 1 à 3, **caractérisé en ce que** la partie fixe de l'élément de réglage de seuil (17) traverse la paroi extérieure de la conduite (1) et s'étend dans une direction inclinée par rapport à celle dans laquelle est mobile la partie mobile de l'élément thermostatique de dosage (7).

7. Dispositif thermostatique selon l'une quelconque des revendications 1 à 3, **caractérisé en ce que** la partie fixe de l'élément de réglage de seuil (17) traverse la paroi extérieure de la conduite (1) et s'étend dans la même direction que celle dans laquelle est mobile la partie mobile de l'élément thermostatique de dosage (7).

8. Dispositif thermostatique selon l'une quelconque des revendications 5 à 7, **caractérisé en ce que** l'élément de réglage de seuil (17) comporte une partie fixe dont un tronçon s'étend dans l'espace interne de la conduite (1 ) approximativement transversalement.

9. Dispositif thermostatique selon l'une quelconque des revendications 1 à 8, **caractérisé en ce que** la conduite (1) est centrée sur un axe longitudinal sur lequel est centré le siège (14) de clapet par lequel une extrémité de la conduite (1) débouche dans la chambre (3), et la partie mobile de l'élément thermostatique de dosage (7) qui porte l'équipage mobile comprenant le clapet (9) pour ce siège est mobile en translation le long de cet axe.

10. Dispositif thermostatique selon l'une quelconque des revendications 1 à 9, **caractérisé en ce que** la conduite (1) est coudée.

11. Dispositif thermostatique selon l'une quelconque des revendications 5 à 7, **caractérisé en ce que** les moyens de chauffage (18) de l'élément de réglage de seuil (17) s'étendent dans la partie fixe de cet élément, dans la direction dans laquelle cette partie fixe traverse la paroi extérieure de la conduite (1).

12. Dispositif thermostatique selon l'une quelconque des revendications 1 à 11, **caractérisé en ce que** les moyens de chauffage (18) de l'élément de réglage de seuil (17) s'étendent dans la direction dans laquelle est mobile la partie mobile de l'élément thermostatique de dosage (7).

13. Dispositif thermostatique selon l'une quelconque des revendications 1 à 12, **caractérisé en ce que** les moyens de chauffage (18) comportent une résistance électrique enroulée.

14. Dispositif thermostatique selon l'une quelconque des revendications 1 à 12, **caractérisé en ce que** les moyens de chauffage électrique (18) comportent une résistance électrique sérigraphiée sur une plaquette isolante.

15. Dispositif thermostatique selon l'une quelconque des revendications 1 à 12, **caractérisé en ce que** les moyens de chauffage électrique (18) comportent une résistance électrique constituée par un barreau résistant.

16. Dispositif thermostatique selon l'une quelconque des revendications 1 à 15, **caractérisé en ce que** les moyens de chauffage (18) comprennent une résistance électrique logée dans un compartiment, renfermant une masse de cire dilatable (21), d'un boîtier appartenant à la partie fixe de l'élément de réglage de seuil (17).

17. Dispositif thermostatique selon l'une quelconque des revendications 1 à 16, **caractérisé en ce que** la partie fixe de l'élément de réglage de seuil (17) comprend un boîtier comportant un compartiment renfermant une masse de cire dilatable (21), ce boîtier présentant en regard du siège (14) une ouverture obturée par un diaphragme (22).

18. Dispositif thermostatique selon l'une quelconque des revendications 1 à 17, **caractérisé en ce que** l'élément de réglage de seuil (17) comporte un diaphragme présentant une forme en cloche dit « diaphragme à sac ».

19. Dispositif thermostatique selon l'une quelconque des revendications 1 à 17, **caractérisé en ce que** l'élément de réglage de seuil (17) comporte un diaphragme plat.

20. Dispositif thermostatique selon l'une quelconque des revendications 1 à 19, **caractérisé en ce que** la conduite (1) comporte deux tronçons (1A, 1B) en aboutement, fixés l'un à l'autre, et dont les surfaces de joint respectives en regard présentent des échancrures dans lesquelles est insérée une région de l'élément de réglage de seuil (17).

21. Dispositif thermostatique selon l'une quelconque des revendications 1 à 20, **caractérisé en ce que** l'équipage mobile de dosage de fluide comprend au moins deux clapets (9, 10), et au moins deux des au moins trois accès (4, 5, 6) sont entourés de sièges (14, 15) respectifs pour les deux clapets de sorte que lorsque l'un quelconque des clapets quitte son siège et s'en éloigne, l'autre se rapproche du sien éventuellement jusqu'à obturation.

22. Dispositif thermostatique selon l'une quelconque des revendications 1 à 21, **caractérisé en ce que** les moyens de chauffage électrique (18) sont reliés par des fils électriques (19) à une source d'alimentation électrique reliée par ailleurs à une sonde (S) de détection de température adaptée pour détecter la température d'un liquide.

23. Dispositif thermostatique selon l'une quelconque des revendications 1 à 22, **caractérisé en ce que** les moyens de chauffage électrique (18) sont reliés par des fils électriques (19) à une source d'alimentation électrique reliée par ailleurs à une sonde (S) de détection de température adaptée pour détecter la température d'un liquide et à une alarme, pour que, lorsque la sonde détecte une température au moins égale à une température de sécurité (T3) prédéterminée, la source d'alimentation électrique soit activée et ainsi d'une part l'élément de réglage (17) soit chauffé électriquement et le dispositif régule dans une gamme basse de températures, et d'autre part l'alarme soit activée.

24. Dispositif thermostatique selon l'une quelconque des revendications 1 à 23, **caractérisé en ce que** la chambre (3) comporte un accès (6) de sortie entouré d'un siège (14) réalisé dans la conduite (1) pour un clapet (9), un accès (4) de sortie éventuellement entouré d'un siège (15) pour un clapet (10), et un accès (5) d'entrée.

25. Dispositif thermostatique selon la revendication 24, **caractérisé en ce que** l'accès (5) d'entrée est un accès d'entrée de liquide chaud provenant d'un moteur (M) par exemple de véhicule, et les accès de sortie (6, 4) sont des accès de sortie de liquide chaud adaptés pour être reliés respectivement à une entrée d'un radiateur de refroidissement (R) et à une entrée du moteur (M) éventuellement par l'intermédiaire d'une pompe de circulation (P).

26. Dispositif thermostatique selon l'une quelconque des revendications 1 à 23, **caractérisé en ce que** la chambre (3) comporte un accès (6) d'entrée entouré d'un siège (14) réalisé dans la conduite (1) pour un clapet (9), un accès (4) d'entrée éventuellement entouré d'un siège (15) pour un clapet (10), et un accès (5) de sortie.

27. Dispositif thermostatique selon la revendication 26, **caractérisé en ce que** l'accès (6) d'entrée entouré d'un siège réalisé dans la conduite est un accès d'entrée de liquide froid adapté pour être relié à un radiateur (R) de refroidissement par exemple de véhicule, l'autre accès (4) d'entrée est un accès d'entrée de liquide chaud provenant d'un moteur (M) du véhicule, et l'accès (5) de sortie est un accès de sortie de liquide chaud ou de liquide froid ou d'un mélange de liquide chaud et de liquide froid en fonction de la position de l'élément thermostatique de dosage (7).
